Europäisches Patentamt

European Patent Office

Office européen des brevets

(19)

(11) Publication number: **0 030 873**
A1

(12) **EUROPEAN PATENT APPLICATION**

(21) Application number: **80304576.4**

(22) Date of filing: **17.12.80**

(51) Int. Cl.³: **A 01 G 9/10**

(30) Priority: **18.12.79 IE 2456/79**
**19.05.80 IE 1039/80**

(43) Date of publication of application:
**24.06.81 Bulletin 81/25**

(84) Designated Contracting States:
**AT BE CH DE FR IT LI LU NL SE**

(71) Applicant: **SOUTHERN CHEMICALS LIMITED**

**Askeaton County Limerick(IE)**

(72) Inventor: **O'Riordain, Diarmuid**
**Askeaton**
**County Limerick(IE)**

(74) Representative: **Connor, Terence Kevin et al,**
**Fitzpatricks Kern House 61/62 Lincoln's Inn Fields**
**London WC2B 6EX(GB)**

(54) **Plant propagating trays.**

(57) A plant propagating tray comprises an array of pots (3) of foamed polystyrene connected together sufficiently weakly by an integral web (2) to permit the array to be readily broken into separate pots without damage to the latter. In order to permit root break-out when the plant has outgrown the pot the lower region of each pot is locally weakened by the provision of slots (8) in the sidewalls (5) of the pot which extend upwardly from the base (4) of the pot, and further slots (9) in the base of the pot itself. The latter slots (9) join the lower ends of the first mentioned slots (8) in such manner as to divide the lower region of each pot into a number of segments which can be splayed mutually outwardly under the pressure of root growth within the pot. In the preferred embodiment the slots decrease in width towards the outside surface of the pots.

FIG.6.

COMPLETE DOCUMENT

This invention relates to plant propagating trays. More specifically it relates to trays for the reception of seeds for germination, and for the propagation of the resultant seedlings.

The known prior art includes a plant propagating tray comprising a connected array of parallel tubular pots of closed-pore foamed plastics material each being open at both ends, each having one of its end in a common plane which in use defines the base of the plant propagating body, and all being disposed on the same side of the plane. The connections between the pots are sufficiently weak to allow the array to be readily broken into separate pots without damage to the latter, and the interior of each pot is occupied by a seed supporting plug which extends to meet the base plane and which has interstices at least some of which have capillary dimensions.

In some applications, however, we have found that it is more appropriate to use loose peat moss or the like in the pots rather than a cohesive plug of seed-supporting material, and in this case the provision of a large bottom opening in the pots is no longer practical and a relatively solid base is required.

In such a case it is necessary in the construction of the pot to provide for the break-out of the root system of the plant in the pot when the plant becomes sufficiently large to require more space than that provided by the interior of the pot. Various constructions of pot are known, including some which are initially connected together for later manual separation, which include slots or holes in the base and/or sidewalls to permit nutrient to enter the pot. However, these constructions are not primarily designed to permit root break-out but rather to preserve the structural integrity of the pot with root growth occuring only through the slots or holes. It is, therefore, an object of the present invention to provide a construction of plant propagating tray in which the individual pots are designed to offer little resistance to root break-out by the plant at the appropriate stage in its growth.

According to the invention there is provided a plant propagating tray comprising a connected array of parallel pots of foamed plastics material each having an open top end, sidewalls and a base, all the bases being disposed in a common plane and all the pots lying on the same side of the plane, and the connections between the pots being sufficiently weak to allow the array to be readily broken into separate pots without damage to the latter, and means locally weakening the lower region of each pot comprising a plurality of grooves in the sidewalls of the pot extending upwardly from the base and a plurality of grooves in the base of the pot joining the lower ends of the first mentioned grooves in such manner as to subdivide the lower region of the pot into a plurality of segments which can be splayed mutually outwardly under the pressure of root growth within the pot, the local weakening means further including at least one aperture permitting nutrient solution or water to enter the interior of the pot. The grooves may consist of a substantial local reduction in the thickness of the pot in the regions concerned (similar to score lines), or more preferably they may extend completely through the thickness of the pot to provide actual slots, at least in respect of the sidewalls and most preferably in respect of the base also. Furthermore, it is preferred that the slots decrease in width outwardly through the thickness of the pots, thereby assisting break-out of the roots by the latter effectively wedging the opposite sides of the slot apart.

The connections between the pots preferably comprise a web of the foamed plastics material, moulded integrally with the pots, and disposed parallel to the bottom of the tray. The web connects for preference the top ends of the pots, and is locally weakened between the pots to permit the ready breakage.

The pots preferably taper inwardly from their top ends to their bases, the bases of the pots defining the bottom of the plant propagating tray. In use, the plant propagating tray rests in a shallow layer of water or nutrient solution in a trough, and each pot contains a quantity of peat moss or the like and a seedling. The water or nutrient solution may be continuously removed from the trough and recirculated thereinto. The nutrient solution reaches the peat moss inside the pots, and hence the seedlings, via the slots in the pot sidewalls.

The connections between the pots, as mentioned above, are sufficiently weak to allow the array to be readily broken manually into separate pots. This is to facilitate transplanting of the seedlings when they have reached the appropriate stage of development, by which stage their root tips will normally have broken out and project from the bases of the pots.

Transplanting may be effected into beds of soil, peat moss or other conventional cultivation medium. Alternatively it may be effected into an apparatus for hydroponic cultivation, if the apparatus is provided with means for supporting the pots with their contained seedlings. A convenient means for supporting them is a hydroponic module having nutrient solution containers of covered form, the covers being perforated with openings adapted to accept and support the pots. In a particularly convenient procedure, the hydroponic module has substantially horizontal tubular channels for nutrient medium, the upper aspect of which channels is perforated with holes into each of which a pot of complementary shape, broken off from a plant propagating tray according to the invention, can be inserted.

Thus the roots of the seedlings are placed in contact with the hydroponic nutrient medium by dangling thereinto from the bases of the pots. When a plant has grown beyond the necessity for support by the encircling walls of the pots, the segments of the pot will yield outwardly before the expansion of the plant body. Alternatively the pot may be broken away manually and the fragments discarded.

Embodiments of the invention will now be described, by way of example, with reference to the accompanying drawings in which:

FIGURE 1 is a perspective view of a plant propagating tray;

FIGURE 2 is a vertical cross-section of part of the tray of FIGURE 1;

FIGURE 3 is a perspective view of a single pot broken off from the tray of FIGURE 1;

FIGURE 4 is a horizontal cross-section through the pot of FIGURE 3;

FIGURE 5 to 7 are views similar to FIGURES 2 to 4 respectively illustrating an alternative form of pot; and

FIGURE 8 to 10 are views similar to FIGURES 2 to 4 respectively illustrating a further alternative form of pot.

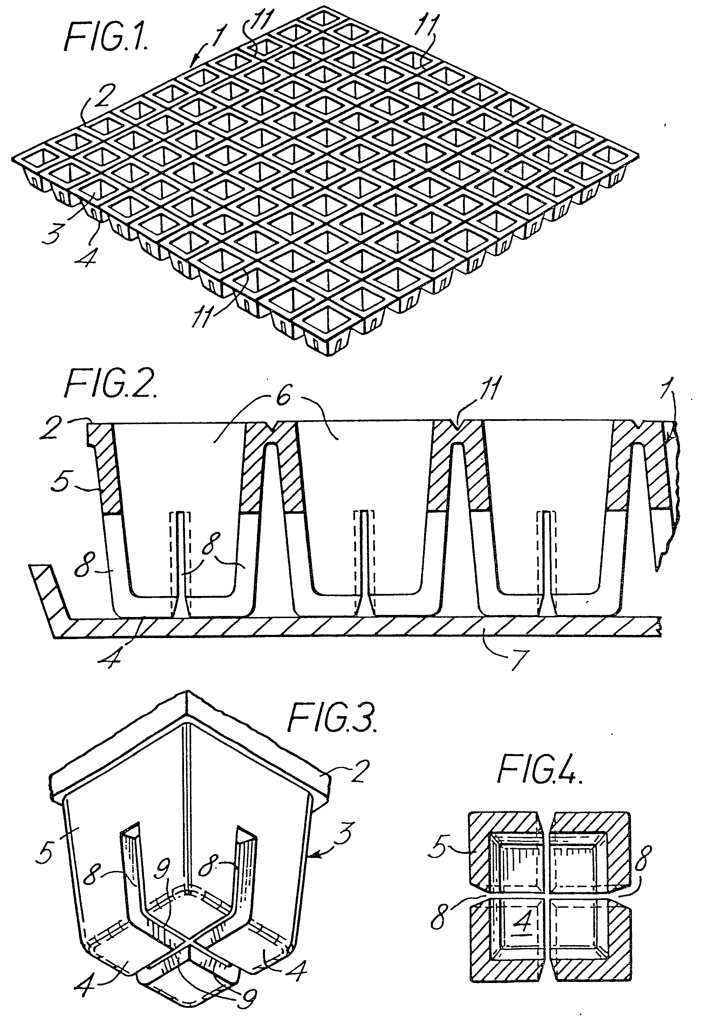

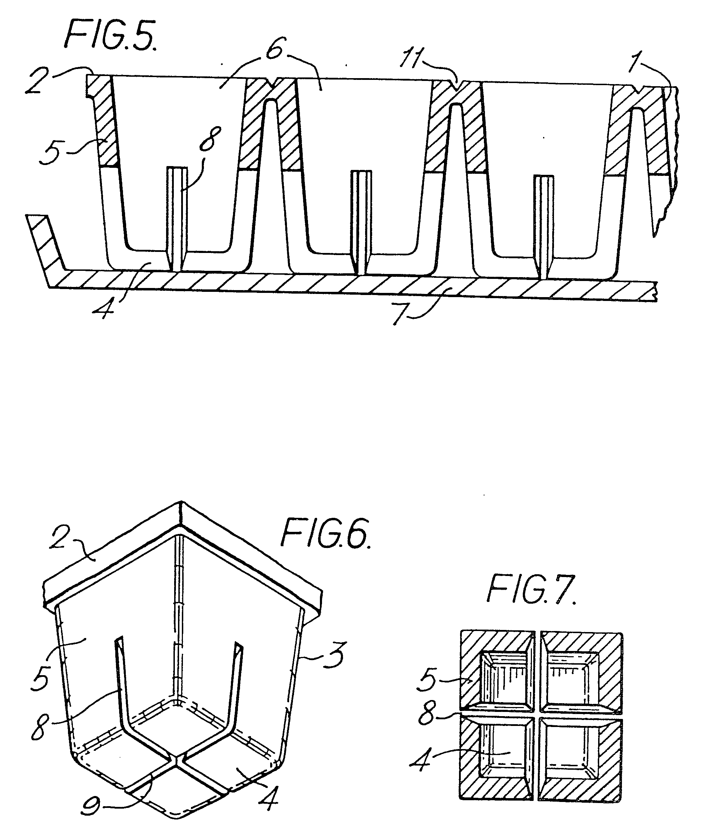

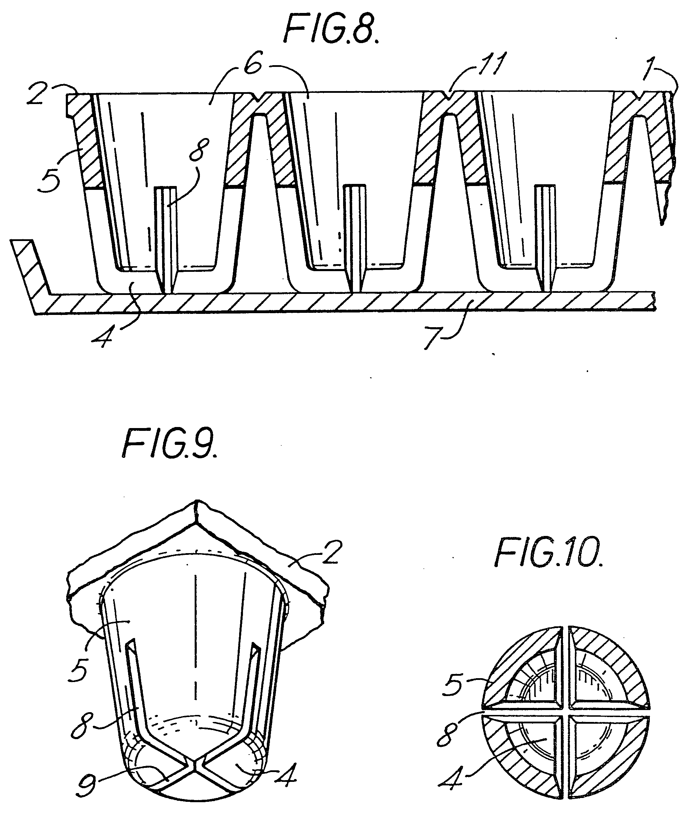

Referring now to FIGURES 1 to 4 of the drawings, a plant propagating tray 1 is an integral moulding in white foamed closed pore polystyrene measuring 47.6cm x 47.6cm x 3.2cm. It is made by steam foaming polystyrene beads in the mould and comprises a sheet or web 2 of thickness 5mm having a rectangular array of 10 x 10, i.e. 100, containers or pots 3 of rectangular cross-section depending therefrom. Each pot 3 on the tray 1 is surrounded by intersecting longitudinal and transverse score lines or v-grooves 11, which allow each pot 3 to be readily broken off manually from the tray without damage to the pots. Each pot has a rectangular base 4, four sidewalls 5 and an open top 6, and all the pots are aligned with their central vertical axes parallel to one another. The thickness of the four sidewalls and the base of each pot is approximately the same as that of the sheet 2 namely 5mm. The overall depth of the pots is 48 mm and each pot tapers at a 5$^{\circ}$ angle from 33 mm at the open top end 6 to 23 mm at the base 4. The base of each pot is in a common plane such that the said plane includes the bottom bases 4 of all the pots 3 in an intact plant propagating tray 1.

In order to permit break-out of the roots of a plant propagated in a pot when the plant becomes large enough to require more space than that provided by the interior of the pot, the lower region of each of the sidewalls 5 and the base 6 of each pot 3 are locally weakened. The weakening in the present embodiment comprises four symmetrically spaced v-grooves 8 in the sidewalls 5 of each pot 3 which extend from the base 4 about half-way up the height of the pot 3, i.e., 25 mm. The grooves 8 in this embodiment extend fully through the thickness of the pot to provide actual slots, each slot 8 having a width of 4 mm at the outside surface of the sidewalls 5 and a width of less than 1mm at the inside surface. The slots 8 thus decrease in width inwardly through the thickness of the sidewalls 5. The weakening further includes four v-grooves 9 in the base 4, the grooves 9 each being joined to the lower end of a respective slot 8 and meeting in the centre of the base 4. As in the case of the grooves 8, in this embodiment the v-grooves 9 provide actual slots in the base which decrease in width inwardly through the thickness of the base. The slots 8 and 9 divide the lower portion of the pot 3 into four segments which can be splayed mutually outwardly under the pressure of root growth within the pot, and thus permit ready break-out of a plant root system from the pot. Furthermore, the slots 8 permit the ingress of nutrient solution to the plant before this stage is reached.

In use, peat moss or the like is placed in each pot 3 and a seed or seeds 8 is placed on the upper region of peat moss in every pot 3 of a plant propagating tray 1. The tray 1 is then placed on a shallow layer of water of perhaps 5 mm depth in a suitable trough 7. The trough and contents are then placed in a suitable environment, as regards temperature, light and ventilation, for propagation of the seeds to seedlings. Plant nutrient substances may be added to the water, or the water replaced with nutrient solution, as and when the progress of the seedlings necessitates such action, or incorporated in the peat moss or the like.

Eventually roots of the seedlings may break-out and appear trailing underneath the tray 1. The seedlings are later judged suitable for transplanting, and the tray 1 is broken up manually into 100 separate pots 3, each of which is inserted in a cooperating orifice in a hydroponic module in such manner that the pot 3 is firmly held in a substantially upright attitude while the roots are bathed by plant nutrient solution within the module. Hydroponic cultivation of the seedlings then proceeds in known manner.

Alternatively the pots 3 with seedlings may be transplanted to a more conventional horticultural medium such as soil.

The plant propagating tray 1 may alternatively, following suitable modification of the design thereof such as the elimination of sharp edges, be fabricated from a sheet of foamed polystyrene by vacuum forming.

The sheet 2 of foamed polystyrene is located for preference connecting the open top ends of the pots 3. When the material thereof is light in colour, e.g., white, this arrangement increases by reflection the amount of light reaching the photosynethetic parts of the seedlings. The sheet 2 may alternatively connect the middles of the pots 3. It may also be perforated between the pots 3 or otherwise diminished to any extent that still leaves the pots 3 joined to adjacent containers with enough rigidity to permit handling of the tray 1 in use.

It will be appreciated that the bases 4 may be provided with downwardly projecting ridges or a plurality of spaced apart downwardly projecting studs, which in use serve to raise the base 4 slightly from the supporting surface, for example, the supporting base of the trough 7.

It is also envisaged that while the present invention has been described as and is claimed as a plant propagating tray, the tray may to advantage also be used for the "growing-on" of seedlings.

Potentially fertile water areas such as inland waterways/ lakes may serve as the "trough" in which the containers separately or as a connected body may be floated. It is also envisaged that the plant propagating body may be used for "growing-on" in a glasshouse or like horticultural buildings. In this instance there is provided relatively large shallow (5-50mm) pools/ponds within the glasshouse.

Figures 5 to 7 illustrate an alternative form of the individual pots 3, in particular the form of the slots 8 and 9. The construction of the plant propagating tray of FIGURES 5 to 7 is basically the same as that described above and the reference numerals used are the same for similar parts. Further, it will be readily appreciated that in general terms the overall manner of use of the plant propagating tray of FIGURES 5 to 7 is also the same as the tray as described earlier.

The difference, however, is that in this embodiment each slot 8 and 9 decreases in width outwardly through the thickness of the pot 3, i.e., the reverse of FIGURES 2 to 4, and has a width of 1mm at the exterior surface of the pot 3 increasing to 4mm at the interior surface of the pot 3.

Figures 8 to 10 illustrate an alternative form of the individual pots 3 in particular in the form of the side walls 5. The construction of the plant propagating tray of Figures 8 to 10 is basically the same as that described above with reference to Figures 5 to 7 of the accompanying drawings and the reference numerals used are the same for similar parts. In this embodiment the sidewalls 5 define a single sidewall of truncated cone form and the slots 8 are equally spaced apart around the surface of the sidewall 5. In the context of the invention as claimed it will be readily appreciated that the truncated cone form sidewall of this embodiment is the equivalent to the stated sidewalls of the previously described embodiments. Further, it will be appreciated that in general terms the overall manner of use of the plant propagating tray of Figures 8 to 10 is the same as the trays as described earlier.

It will be readily appreciated that the construction of plant propagating tray with the sidewall slots and base slots decreasing outwardly in width through the thickness of the sidewalls and the base respectively allows that peat in the bottom of the pots lies in the slots and grooves. This feature greatly facilitates absorption by the peat of water or plant nutrient solution, when the tray and/or individual pots are in use, in particular, a hydroponic use. Furthermore, this arrangement assists the eventual break-out of the root system by the wedging action referred to earlier.

The invention is not limited to the embodiments described above which may be modified and/or varied without departing from the scope of the invention.

CLAIMS:

1.      A plant propagating tray comprising an array of parallel pots of foamed plastics material connected together sufficiently weakly to permit the array to be readily broken into separate pots·without damage to the latter, and at least one aperture in each pot to permit nutrient solution to enter the interior of the pot, characterised in that the lower region of each pot (3) is locally weakened by the provision of grooves (8) in the sidewalls (5) of the pot which extend upwardly from the base (4) and further grooves (9) in the base which join the lower ends of the firstmentioned grooves (8) in such manner as to subdivide the lower region of each pot (3) into a plurality of segments which can be splayed mutually outwardly under the pressure of root growth within the pot.

2.      A plant propagating tray according to claim 1, characterised in that at least in the sidewalls (5) of each pot the grooves (8) extend completely through the thickness of the pot to provide slots in the sidewalls.

3.      A plant propagating tray according to claim 2, characterised in that the grooves (9) in the base (4) also extend completely through the thickness of the pot to provide slots in the base.

4..      A plant propagating tray according to claim 2 or 3, characterised in that the slots (8,9) decrease in width outwardly through the thickness of the pot to provide slots in the base.

5.      A plant propagating tray according to any preceding claim, characterised in that each pot (3) comprises a plurality of grooves (8) symmetrically distributed around the sidewalls (5) and a plurality of grooves (9) in the base (4) each joined to the lower end of a respective sidewall groove (8) and meeting in the centre of the base (4).

0030873

6.      A plant propagating tray according to any preceding claim, characterised in that the pots (3) are connected to an integral web (2) disposed parallel to the bases (4) of the pots.

7.   · · · A plant propagating tray according to claim 6, characterised in that the web (2) is disposed at the top ends (6) of the pots (3).

8.      A plant propagating tray according to claim 6 or 7, characterised in that the web (2) is locally weakened (11) between the pots (3) to permit the said ready breakage.

9.      A plant propagating tray according to any preceding claim, characterised in that each pot (3) tapers inwardly from the top end (6) to the base (4).

10.     A plant propagating tray according to any preceding claim, characterised in that the tray is moulded from foamed polystyrene.

FIG.1.

FIG.2.

FIG.3.

FIG.4.

FIG.5.

2  6  11  1

5

8

4  7

FIG.6.

2

5

8

3

9  4

FIG.7.

5

8

4

## FIG.8.

## FIG.9.

## FIG.10.

## EUROPEAN SEARCH REPORT

European Patent Office

| Category | DOCUMENTS CONSIDERED TO BE RELEVANT | Relevant to claim | CLASSIFICATION OF THE APPLICATION (Int. Cl.³) |
|---|---|---|---|
| | Citation of document with indication, where appropriate, of relevant passages | | |
| | GB - A - 1 034 256 (D. MARCAN) <br> * page 1, lines 72 to 83; page 2, lines 26 to 40; fig. 1 to 3 * <br> -- | 1,3, 6-9 | A 01 G 9/10 |
| | US - A - 4 144 672 (J. GRADWELL et al.) <br> * column 2, line 16 to column 3, line 5; fig. 1 to 4 * <br> -- | 1,3,10 | |
| A | US - A - 3 035 369 (H. HELFERT) <br> * column 1, lines 40 to 49; fig. 1 to 3 * <br> -- | 1 | **TECHNICAL FIELDS SEARCHED (Int. Cl.³)** <br><br> A 01 G 9/10 |
| A | US - A - 3 755 964 (D. RACK) <br> * abstract; fig. * <br> ---- | 1 | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | The present search report has been drawn up for all claims | |
|---|---|---|
| Place of search <br> Berlin | Date of completion of the search <br> 04-03-1981 | Examiner <br> SCHOFER |

X

EPO Form 1503.1 06.78